# EUROPÄISCHE PATENTSCHRIFT

(11) **EP 2 596 980 B1**
(45) Veröffentlichungstag und Bekanntmachung des Hinweises auf die Patenterteilung: **27.12.2023**
(21) Anmeldenummer: 12193178.6
(22) Anmeldetag: 19.11.2012
(51) Int. Cl.: B60L 7/06, H02M 5/45, H02P 3/22, H02M 1/32, H02M 7/483, H02M 7/219

(54) **Mehrpunkt-Stromrichter mit Bremschopper**
Multiple point frequency converter with brake chopper
Convertisseur de courant à plusieurs points avec hacheur de freinage

(30) Priorität: 25.11.2011 DE 102011087151
(43) Veröffentlichungstag der Anmeldung: 29.05.2013
(73) Patentinhaber: GE Energy Power Conversion GmbH, 12277 Berlin (DE)
(72) Erfinder: Jakob, Roland, 12524 Berlin (DE); Brückner, Thomas, 80804 München (DE)
(74) Vertreter: Serjeants LLP

(56) Entgegenhaltungen:
- US-A- 4 405 977
- US-A1- 2006 176 028
- US-A1- 2010 034 001

## Beschreibung

Die Erfindung betrifft eine elektrische Schaltung für einen Stromrichter nach dem Oberbegriff des Anspruchs 1 bzw. Anspruch 6 sowie ein Verfahren zu ihrem Betrieb nach Anspruch 11 bzw. Anspruch 14.

In Stromrichtern kann sich die Notwendigkeit ergeben, im Stromrichter vorhandene überschüssige Energie in Wärme umzusetzen. Die Gründe dafür können vielfältiger Natur sein. Z.B. kann es vorkommen, dass eine an einen Stromrichter angeschlossene Energiequelle (z.B. eine Windkraftanlage) Energie an den Stromrichter liefert, eine an einer anderen Stelle an den Stromrichter angeschlossene Energiesenke aber keine Energie aufnehmen kann (z.B. ein Energieversorgungsnetz im Kurzschlussfall) oder aber der Stromrichter aufgrund seines Aufbaus nicht fähig ist, Energie in des Netz zurückzuspeisen. In Stromrichtern mit einem Spannungszwischenkreis könnte dies zu einer unzulässigen Erhöhung der Zwischenkreisspannung führen; die Energie muss abgebaut werden. Ebenso ist es möglich, dass es in Mehrpunkt-Stromrichtern in bestimmten Betriebszuständen (in Abhängigkeit von der Belastung, der Regelung, dem Aufbau) zu einer Unsymmetrie der Spannungen von in Reihe geschalteten Kondensatoren eines Spannungszwischenkreises kommen kann. Auch in diesem Fall kann es notwendig sein, Energie in Wärme umzusetzen. Des Weiteren kann es auch andere betriebsmäßige Gründe dafür geben, Spannungen an Zwischenkreiskondensatoren zu einem bestimmten Zeitpunkt abzusenken und die in ihnen gespeicherte Energie in Wärme umzusetzen.

Die Aufgabe, überschüssige Energie in Wärme umzusetzen, wird von einem Bremschopper übernommen. Auch Bremschopper sind seit langem bekannt und bestehen in der Regel im wesentlichen aus einem abschaltbaren Leistungshalbleiterschalter und einem Leistungswiderstand, die an den Gleichspannungsanschlüssen eines Spannungswechselrichters angeschlossen sind (Leistungselektronik: Von Peter F. Brosch, Joachim Landrath, Josef Wehberg; Seite 107; SEW Handbuch Seite 17).

Es gibt einige Ansätze, die daraufhin zielen, den Aufwand an Halbleiterschaltern für die Bremschopper-Schaltung zu verringern. So werden beispielsweise in der DD 204012 A1, der DD 204013 A1 und der DD 204579 A1 verschiedene Schaltungen vorgeschlagen, die am Ausgang eines Spannungswechselrichters angeschlossen sind und deshalb mit nicht abschaltbaren Halbleiterschaltern arbeiten können, solange am Ausgang des Stromrichters eine Wechselspannung erzeugt wird. In der DE 196 48 948 Cl wird eine Schaltung vorgeschlagen, die parallel zu einem Halbleiterschalter eines Spannungswechselrichters geschaltet ist und mit nicht abschaltbaren Halbleiterschaltern auskommt. In der US 7141947 B2 wird vorgeschlagen, den eigentlichen dreiphasigen Wechselrichter mit Bremswiderständen zu ergänzen und als Bremschopper zu betreiben.

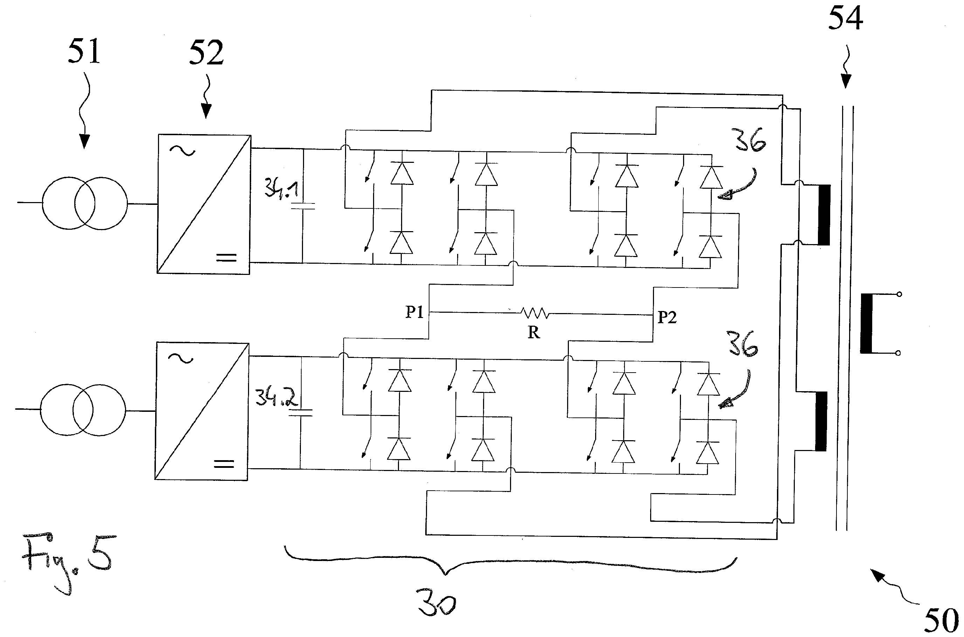

Die Figur 5 der DE 102 17 889 A1 zeigt einen dreiphasigen modularen Stromrichter nach dem Stand der Technik. In der DE 10 2008 045 247 A1 ist ein Bremschopper beschrieben, wie er z.B. in einer Schaltung gemäß DE 102 17 889 A1 angewendet werden könnte. Der Bremschopper gemäß DE 10 2008 045 247 A1 ist modular mit verteilten Bremswiderständen aufgebaut. Hier sind verschiedene Möglichkeiten beschrieben, wie durch Zuordnung des Bremswiderstandes zu einem leistungselektronischen Modul ein modularer Aufbau und eine Aufteilung der Bremsleistung in mehrere solcher Module erreicht werden kann.

Allen aufgeführten Beispielen gemäß dem Stand der Technik ist jedoch gemein, dass für die Steuerung der Bremschopper- Schaltung Halbleiterschalter erforderlich sind, welche zusätzlich zu den Halbleiterschaltern im eigentlichen Stromrichter benötigt werden, um die Funktion des Bremschoppers zu gewährleisten.

Die US 2010/0034001 A1 offenbart eine elektrische Schaltung mit Abgleichwiderständen, die zwischen die Anschlüsse einer Kondensatorbank geschaltet sind. Der Stromfluss durch die Abgleichwiderstände wird nicht von den Halbleiterventilen gesteuert. Die US 4405977 offenbart eine Kommutierungsschaltung zum Kommutieren eines leitenden Thyristors.

Die US 2006/0176028 A1 offenbart ein System und ein Verfahren, das den Bremswiderstand verwendet, der üblicherweise in elektrisch oder hybrid elektrisch angetriebenen Fahrzeugen verwendet wird und zur Verfügung steht, um den Vorladestrom während des Startens einer Hochleistungs-Ultrakondensatorpackungs-Energiespeichervorrichtung.

Aufgabe der Erfindung ist es, eine elektrische Schaltung zu schaffen, die mit geringem Aufwand eine Vermeidung oder Verminderung von Überspannungen ermöglicht.

Die Erfindung löst diese Aufgabe durch eine elektrische Schaltung nach dem Anspruch 1 und dem nebengeordneten Anprucuch 6 sowie durch ein Verfahren nach dem Anspruch 11 und dem nebengeordneten Anspruch 14.

Erfindungsgemäß ist die elektrische Schaltung aus zwei oder mehreren parallelen Schaltungsstrukturen aufgebaut und innerhalb dieser Strukturen mit einer Anzahl von Halbleiterschaltern und Kondensatoren versehen, die zum

Betrieb des Stromrichters vorhanden sind. Weiterhin ist die elektrische Schaltung mit mindestens einem Widerstand versehen, der zum Abbau von Energie vorgesehen ist. Dieser so genannte Bremswiderstand ist dabei mit den vorhandenen Halbleiterschaltern verbunden, ohne dass ein zusätzlicher Schalter vorhanden ist. Der Bremswiderstand ist zwischen einen Knoten einer Schaltungsstruktur und einen Knoten einer dazu parallelen Schaltungsstruktur geschaltet. Erfindungsgemäß sind der Betrieb des Stromrichters und der Strom durch den Bremswiderstand mittels der vorhandenen Halbleiterschalter steuerbar.

Durch die Erfindung kann somit in Stromrichtern, bei denen eine Bremschopper-Funktionalität gefordert wird, vollständig auf Leistungshalbleiterschalter verzichtet werden, die ausschließlich für die Funktion des Bremschoppers benutzt werden.

Im Unterschied zum Stand der Technik erfordert die erfindungsgemäße elektrische Schaltung somit keine zusätzlichen Schalter oder dergleichen, um den Strom durch den Bremswiderstand zu steuern. Stattdessen wird der Strom durch den Bremswiderstand allein mit Hilfe der für den Betrieb des Stromrichters vorhandenen Halbleiterschalter betrieben. Dies stellt eine Verminderung des Aufwands und der Kosten für die erfindungsgemäße Schaltung dar.

Gegebenenfalls kann es lediglich erforderlich sein, die Art der Verschaltung der einzelnen Halbleiterschalter und deren Ansteuerung anzupassen.

Mehrpunkt-Stromrichter besitzen so genannte redundante Schaltzustände, welche dadurch gekennzeichnet sind, dass sie jeweils die gleichen Potentialstufen an den Ausgangsklemmen des Stromrichters erzeugen, die Zustände der einzelnen Halbleiterschalter sich zwischen den redundanten Schaltzuständenaber unterscheiden. Die Potentiale an den Verbindungspunkten zwischen den Halbleiterschaltern sindebenfalls unterschiedlich.

Unter Potentialstufen an den Ausgangsklemmen versteht man die durch die Schaltzustände der Halbleiterschalter bestimmten Stufen der Ausgangsspannung. Zum Beispiel verfügt eine Phase eines dreistufigen Stromrichters über die drei Potentialstufen Plus, Null und Minus.

Bei einer vorteilhaften Weiterbildung der Erfindung werden die redundanten Schaltzustände von Mehrpunkt-Stromrichtern so genutzt, dass mit ihrer Hilfe der Umsatz von Energie im Bremswiderstand über die vorhandenen Halbleiterschalter gesteuert werden kann, ohne dass dabei die Steuerung des Betriebs des Stromrichters, d.h. das Stellen seiner Ausgangsspannung bzw. seines Ausgangsstromes, beeinträchtigt wird.

Werden die Halbleiterschalter beider paralleler Strukturen, an welche der Bremswiderstand angeschlossen ist, ausschließlich zur Steuerung des Betriebs des Stromrichters genutzt, weisen bei einer vorteilhaften Ausgestaltung der Erfindung die beiden Anschlusspunkte, mit denen der Bremswiderstandverbunden ist, ein gleiches Potential auf.

Werden die Halbleiterschalter beider paralleler Strukturen, an welche der Bremswiderstand angeschlossen ist, gleichzeitig zur Steuerung des Stromrichters auch zur Steuerung des Stroms durch den Bremswiderstand genutzt, sind bei einer weiteren vorteilhaften Ausgestaltung der Erfindung die Halbleiterschalter derart ansteuerbar, dass die beiden Knoten, mit denen der Bremswiderstand verbunden ist, ein ungleiches Potential aufweisen. Dies bedeutet, dass, während die parallelen Schaltungsstrukturen wie in einer Parallelschaltung als Stromrichter arbeiten, wahlweise unter Nutzung redundanter Schaltzustände eine Spannung an die Bremswiderstände geschaltet werden kann.

Weitere Merkmale, Anwendungsmöglichkeiten und Vorteile der Erfindung ergeben sich aus der nachfolgenden Beschreibung von Ausführungsbeispielen der Erfindung, die in Figuren dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in den Figuren.

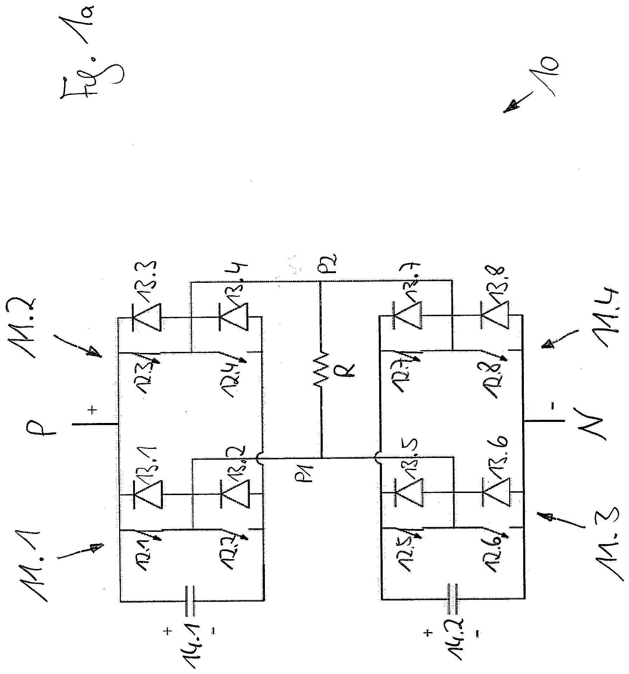

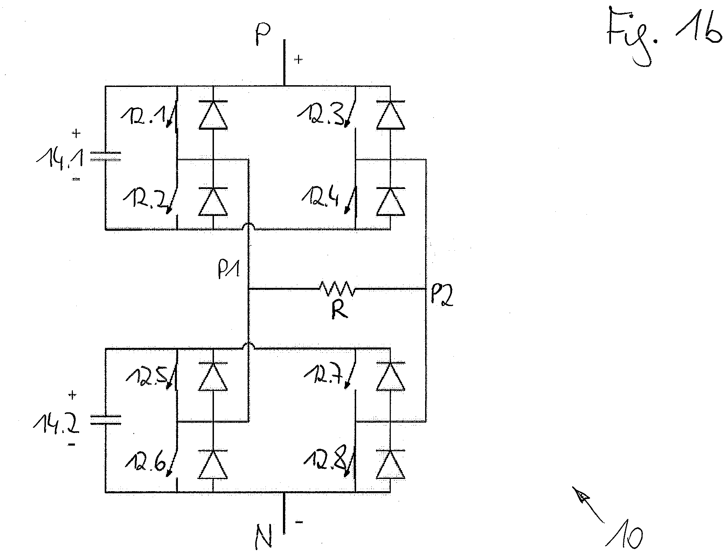

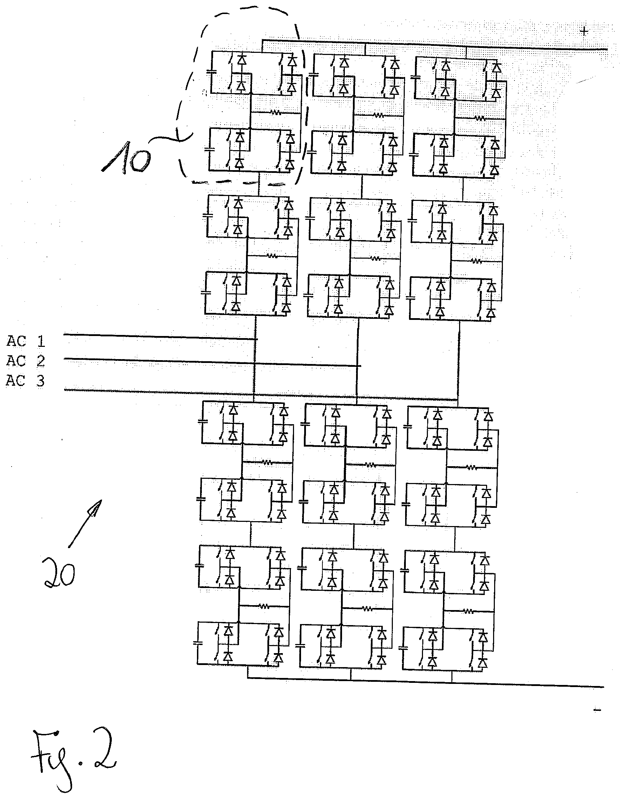

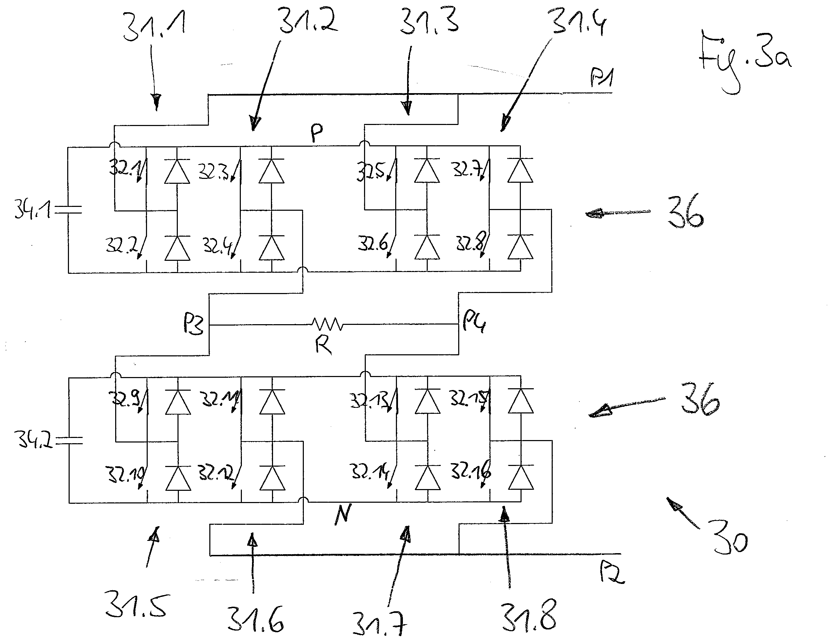

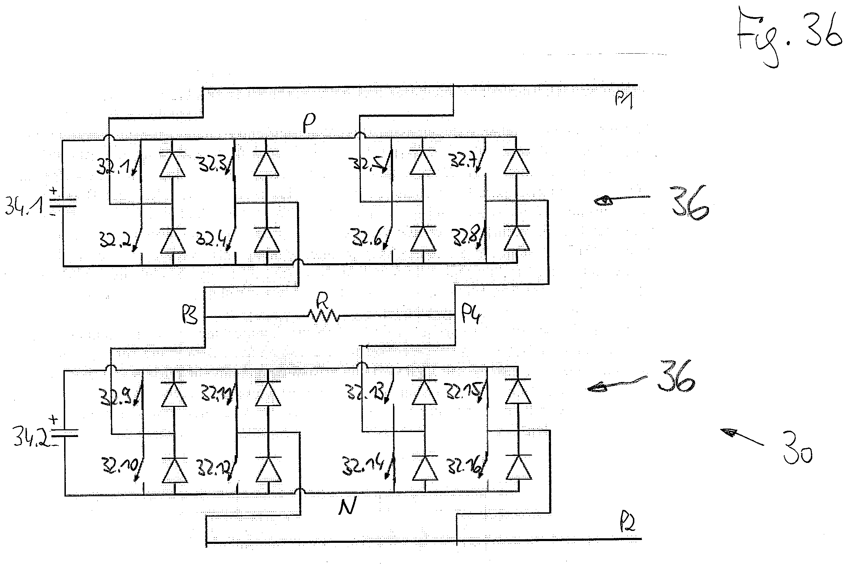

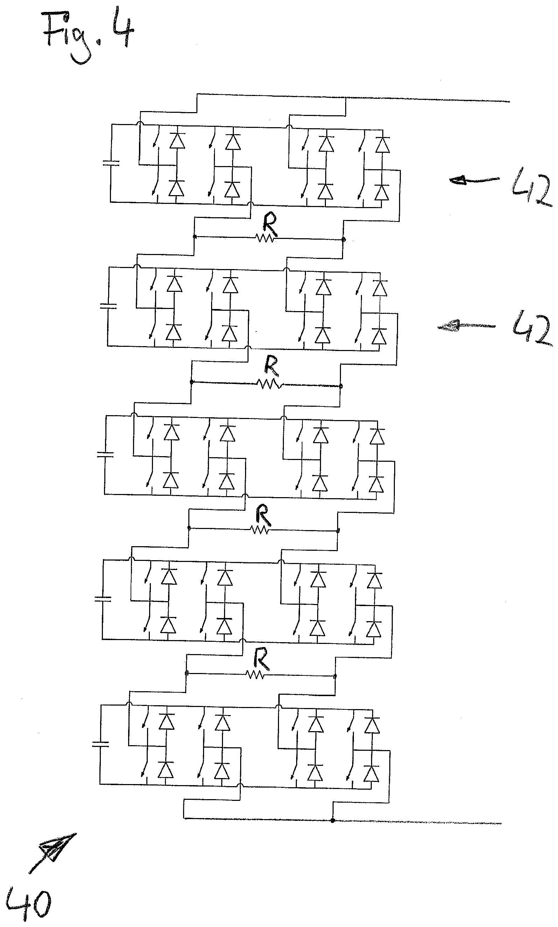

Die Figuren la und lb zeigen schematische Schaltbilder eines ersten Ausführungsbeispiels einer erfindungsgemäßen Schaltung eines Stromrichtersubsystemes zur Verwendung in einem Stromrichter, die Figur 2 zeigt ein schematisches Schaltbild eines eine erfindungsgemäße Schaltung verwendenden dreiphasigen Stromrichters, die Figuren 3a, 3b zeigen schematische Schaltbilder eines zweiten Ausführungsbeispiels einer erfindungsgemäßen elektrischen Schaltung für einen Stromrichterzweig mit parallelen Schaltungsstrukturen, die Figur 4 zeigt ein drittes Ausführungsbeispiel einer erfindungsgemäßen elektrischen Schaltung für einen Stromrichterzweig und die Figur 5 zeigt ein Ausführungsbeispiel für eine weitere Anwendung einer erfindungsgemäßen Schaltung nach den Figuren 3a, 3b.

In der Figur 2 ist eine dreiphasige Darstellung eines modularen Mehrpunkt-Stromrichters 20 gezeigt. Diese Art von Mehrpunkt-Stromrichter ist auch unter dem englischen Namen "Modular Multilevel Converter" (M2C) bekannt.

Jede der drei Phasen des Stromrichters 20 ist aus zwei parallelen Schaltungsstrukturen aufgebaut. Des Weiteren besteht jede der drei Phasen aus einer Anzahl von Stromrichtersubsystemen 10, in diesem Ausführungsbeispiel aus jeweils vier Stromrichtersubsystemen 10 je Phase. Ein einzelnes dieser Stromrichtersubsysteme wird nachfolgend anhand der Figuren la, lb näher erläutert.

Die Stromrichtersubsysteme 10 beinhalten die parallelen Schaltungsstrukturen. Die Halbleiterschalter jedes Stromrichtersubsystems und alle Stromrichtersubsysteme gemeinschaftlich dienen der Steuerung des Betriebs des Stromrichters 20. Die Halbleiterschalter jedes einzelnen Stromrichtersubsystems 21 dienen gleichzeitig und unabhängig von den anderen Stromrichtersubsystemen 10 der Steuerung einer Bremschopper-Funktion, und zwar mit Hilfe des im jeweiligen Stromrichtersubsystem vorhandenen Bremswiderstands. Die Ansteuerung der Halbleiterschalter eines Stromrichtersubsystems 10 zur Realisierung der Bremschopper-Funktion wird ebenfalls nachfolgend anhand der Figuren la, lb näher beschrieben.

In den Figuren la, lb ist ein Stromrichtersubsystem 10 gezeigt, das bei dem Stromrichter 20 der Figur 2 verwendet werden kann.

Das Stromrichtersubsystem 10 besteht aus vier Modulen 11.1, 11.2, 11.3, 11.4. Jedes der Module weist eine Serienschaltung zweier Halbleiterschalter sowie eine Serienschaltung zweier zu den Halbleiterschaltern gegensinnig geschalteter Dioden auf. Die beiden Serienschaltungen sind zueinander parallel geschaltet. Die Verbindungspunkte der beiden Halbleiterschalter und der beiden Dioden sind miteinander verbunden und bilden einen Wechselspannungsanschluss des jeweiligen Moduls. Parallel zu den beiden Serienschaltungen ist ein Kondensator geschaltet. Die beiden Anschlüsse des Kondensators bilden einen positiven und einen negativen Anschluss des jeweiligen Moduls.

Bei dem Stromrichtersubsystem 10 der Figuren la, lb sind die beiden Module 11.1, 11.2 und die beiden Module 11.3, 11.4 jeweils zueinander parallelgeschaltet. Weiterhin sind die Wechselspannungsanschlüsse der beiden Module 11.1, 11.3 sowie die Wechselspannungsanschlüsse der beiden Module 11.2, 11.4 miteinander verbunden, wobei die entstehenden Verbindungspunkte als Anschlusspunkte Pl, P2 gekennzeichnet sind. Die positiven Anschlüsse der beiden Module 11.1, 11.2 bilden einen Anschlusspunkt P des Stromrichtersubsystems 10 und die negativen Anschlüsse der beiden Module 11.3, 11.4 bilden einen Anschlusspunkt N des Stromrichtersubsystems 10.

Die Halbleiterschalter, Dioden und Kondensatoren der vier Module sind durchnummeriert, und zwar sind die Halbleiterschalter 12.1, 12.2, 12.3, 12.4, 12.5, 12.6, 12.7, 12.8, die Dioden 13.1, 13.2, 13.3, 13.4, 13.5, 13.6, 13.7, 13.8 und die Kondensatoren 14.1, 14.2 vorhanden.

Im Hinblick auf die Kondensatoren der vier Module wird darauf hingewiesen, dass die beiden Kondensatoren der beiden Module 11.1, 11.2 sowie die beiden Kondensatoren der beiden Module 11.3, 11.4 jeweils zu den in der Figur dargestellten Kondensatoren 14.1, 14.2 zusammengefasst sind. Die Kondensatoren können in der Praxis für jedes Modul separat oder für alle parallel geschalteten Module zusammengefasst ausgeführt sein.

Die Wechselspannungsanschlüsse der in Reihe geschalteten Module können gegebenenfalls über Induktivitäten miteinander verbunden sein.

Zwischen die beiden Anschlusspunkte Pl, P2 ist ein Bremswiderstand R geschaltet.

Bei dem Stromrichter 20 der Figur 2 sind, wie bereits erwähnt wurde, pro Phase jeweils vier Stromrichtersubsysteme 10 in Reihe geschaltet. Die vier Stromrichtersubsysteme 10 der drei Phasen sind zueinander parallelgeschaltet. Die Anschlusspunkte P bzw. N der beiden äußersten Stromrichtersubsysteme 10 der drei parallelgeschalteten Reihenschaltungen stellen die Gleichspannungsanschlüsse +, - des Stromrichters 20 dar. Die jeweiligen Verbindungspunkte der beiden mittleren Stromrichtersubsysteme 10 der drei Reihenschaltungen stellen die Wechselspannungsanschlüsse ACl, AC2, AC3 des Stromrichters 20 dar.

Im Normalbetrieb des Stromrichters 20 werden in den Stromrichtersubsystemen 10 die beiden parallelgeschalteten Module 11.1, 11.2 und die beiden parallelgeschalteten Module 11.3, 11.4 jeweils gleichartig angesteuert.

Soll beispielsweise die Spannung des Kondensators 14.2 zwischen die Anschlüsse P und N des Stromrichtersubsystems 10 geschaltet werden, so werden die Halbleiterschalter 12.1, 12.3, 12.5, 12.7 leitend geschaltet und die anderen Halbleiterschalter gesperrt.

Ferner existieren die Möglichkeiten, die Spannung des Kondensators 14.1 zwischen die Anschlüsse P und N des Stromrichtersubsystems 10 zu schalten, die Summe der Spannungen der Kondensatoren 14.1, 14.2 zwischen die Anschlüsse P und N zu schalten, oder die Anschlüsse P und N miteinander zu verbinden.

In der Figur la ist die erstgenannte Ansteuerung der Halbleiterschalter mit Hilfe von durchgezogenen Linien bei den jeweils leitend geschalteten Halbleiterschaltern dargestellt.

Durch die gleichartige Ansteuerung der Halbleiterschalter im Normalbetrieb liegen an den beiden Anschlusspunkten Pl, P2 dieselben Potentiale an, so dass im Normalbetrieb an dem Bremswiderstand R keine Spannung abfällt.

Zum Beispiel zur Verminderung oder Vermeidung von Überspannungen an den Kondensatoren 14.1, 14.2 können die Halbleiterschalter auch andersartig angesteuert werden. Dies ist in der Figur lb dargestellt.

Nach der Figur lb sind die Halbleiterschalter 12.1, 12.4, 12.5, 12.8 leitend geschaltet und die anderen Halbleiterschalter gesperrt. Unter der Voraussetzung, dass die Spannungen an den Kondensatoren 14.1, 14.2 gleich groß sind, wird damit die Spannung der Kondensatoren 14.1, 14.2 parallel zwischen die Anschlüsse P und N des Stromrichtersubsystems 10 geschaltet. Des Weiteren ist der Anschlusspunkt Pl über die Halbleiterschalter 12.1, 12.5 mit den positiven Anschlüssen der beiden Kondensatoren 14.1, 14.2 verbunden sowie der Anschlusspunkt P2 über die Halbleiterschalter 12.4, 12.8 mit den negativen Anschlüssen der beiden Kondensatoren 14.1, 14.2 verbunden.

Wie bereits erläutert wurde, ist der Bremswiderstand R zwischen die beiden Anschlusspunkte Pl, P2 geschaltet. Da die Anschlusspunkte Pl, P2 mit den positiven und negativen Anschlüssen der beiden Kondensatoren 14.1, 14.2 verbunden sind, ist der Bremswiderstand R zu den beiden Kondensatoren 14.1, 14.2 jeweils parallel geschaltet.

Dies hat zur Folge, dass sich bei der vorstehend erläuterten andersartigen Ansteuerung der Halbleiterschalter gemäß der Figur lb die Kondensatoren 14.1, 14.2 über den Bremswiderstand R entladen können. Beispielsweise kann eine an den Kondensatoren 14.1, 14.2 vorhandene Überspannung somit über den Bremswiderstand R abgebaut werden.

Hinsichtlich der an den Anschlüssen P und N anliegenden Spannung verhält sich das Stromrichtersubsystem 10 in diesem Schaltzustand genau so, wie in dem oben beschriebenen Schaltzustand, bei dem keine Spannung am Bremswiderstand R anliegt. Es handelt sich also um einen redundanten Schaltzustand, der im Hinblick auf den Normalbetrieb des Stromrichtersubsystems 10 dasselbe Verhalten zeigt. Bei dem andersartigen Betrieb der Figur lb liegt allerdings eine Spannung am Bremswiderstand Ran, während dies beim Normalbetrieb der Figur la nicht der Fall ist.

Es kann somit je nach Anforderungen des Betriebszustandes des Stromrichters Leistung in dem Bremswiderstand R umgesetzt werden. Zusätzliche schaltbare Bauelemente sind hierzu nicht erforderlich.

Dies wird ganz allgemein dadurch erreicht, dass das Stromrichtersubsystem 10 mit Hilfe von Halbleiterschaltern aufgebaut ist, und dass zumindest ein Bremswiderstand derart in die elektrische Schaltung des Stromrichtersubsystems 10 verschaltet ist, dass ein Stromfluss durch diesen Bremswiderstand nur von den vorhandenen Halbleiterschaltern des Stromrichtersubsystems 10 beeinflusst wird, also ohne dass hierzu ein zusätzlicher Schalter erforderlich wäre.

Es versteht sich, dass die andersartige Ansteuerung der Halbleiterschalter auch gerade umgekehrt zur Figur lb erfolgen kann, also dass die Halbleiterschalter 12.2, 12.3, 12.6, 12.7 leitend geschaltet und die anderen Halbleiterschalter gesperrt sind.

Die anhand der Figur lb erläuterte, andersartige Ansteuerung der Halbleiterschalter kann im Rahmen eines prozentualen Zeitanteils im Vergleich zum Normalbetrieb durchgeführt werden. Auf diese Weise kann die Leistung beeinflusst werden, die mit Hilfe der andersartigen Ansteuerung der Halbleiterschalter in dem Bremswiderstand R in Wärme umgesetzt und damit abgebaut werden kann.

Die Figuren 3a, 3b zeigen eine einphasige Darstellung eines Stromrichters 30 mit parallelen Schaltungsstrukturen. Die in den Figuren 3a, 3b gezeigte Schaltung kann ebenfalls als Stromrichtersubsystem 30 verstanden werden und anstelle des Stromrichtersubsystems 10 in einem modularen Mehrpunkt-Stromrichter 20 gemäß Figur 2 eingesetzt werden.

In dem Stromrichter 30 oder Stromrichtersubsystem 30 nach den Figuren 3a, 3b wird die Gleichspannung der Kondensatoren 34.1, 34.2 in eine Gleichspannung oder Wechselspannung an den Anschlüssen Pl und P2 umgewandelt. Die Leistungszuführung zu den Kondensatoren 34.1 und 34.2 ist nicht dargestellt.

In den Figuren 3a, 3b ist der einfachste Fall von jeweils zwei in Reihe geschalteten sogenannten H-Brücken 36 dargestellt. Selbstverständlich lässt sich die Schaltung auf eine beliebige Zahl in Reihe geschalteter H-Brücken 36 erweitern. Dies wird anhand der Figur 4 noch erläutert werden.

Der Stromrichter 30 der Figuren 3a, 3b besteht aus acht Modulen 31.1, 31.2, 31.3, 31.4, 31.5, 31.6, 31.7, 31.8. Jedes der Module weist eine Serienschaltung zweier Halbleiterschalter sowie eine Serienschaltung zweier gegensinnig zu den Halbleiterschaltern geschalteter Dioden auf. Die beiden Serienschaltungen sind zueinander parallel geschaltet. Die Verbindungspunkte der beiden Halbleiterschalter und der beiden Dioden sind miteinander verbunden und bilden einen Wechselspannungsanschluss des jeweiligen Moduls. Parallel zu den beiden Serienschaltungen ist ein Kondensator geschaltet. Die beiden Anschlüsse des Kondensators bilden einen positiven und einen negativen Gleichspannungsanschluss des jeweiligen Moduls.

Bei dem Stromrichter 30 der Figuren 3a, 3b sind die Module 31.1, 31.2, 31.3, 31.4 sowie die Module 31.5, 31.6, 31.7, 31.8 jeweils zueinander parallel geschaltet. Weiterhin sind die Wechselspannungsanschlüsse der Module 31.1, 31.3 bzw. 31.6, 31.8 bzw. 31.2, 31.5 bzw. 31.4, 31.7 miteinander verbunden, wobei die entstehenden Verbindungspunkte als Anschlusspunkte Pl, P2, P3, P4 gekennzeichnet sind.

Die Halbleiterschalter und Kondensatoren der acht Module sind durchnummeriert, und zwar sind die Halbleiterschalter 32.1, 32.2, 32.3, 32.4, 32.5, 32.6, 32.7, 32.8, 32.9, 32.10, 32.11, 32.12, 32.13, 32.14, 32.15, 32.16 und die Kondensatoren 34.1, 34.2 vorhanden. Die Dioden sind nicht näher gekennzeichnet.

Im Hinblick auf die Kondensatoren der acht Module wird darauf hingewiesen, dass die vier Kondensatoren der Module 31.1, 31.2, 31.3, 31.4 sowie die vier Kondensatoren der Module 31.5, 31.6, 31.7, 31.8 jeweils zu den dargestellten Kondensatoren 34.1, 34.2 zusammengefasst sind. Die Kondensatoren können in der Praxis für jedes Modul separat oder für alle parallel geschalteten Module zusammengefasst ausgeführt sein.

Die Wechselspannungsanschlüsse der in Reihe geschalteten Module können gegebenenfalls über Induktivitäten miteinander verbunden sein.

Des Weiteren wird darauf hingewiesen, dass die positiven und negativen Anschlusspunkte der Kondensatoren 34.1, 34.2 die eingangsseitigen Gleichspannungsanschlüsse des Stromrichters 30 darstellen, deren Versorgung nicht näher dargestellt ist. Es wird auch darauf hingewiesen, dass die Einspeisungen der Kondensatoren 34.1 und 34.2 jeweils potentialgetrennt erfolgen muss. Ob eine eingangsseitige Einspeisung in die Anschlusspunkte der Kondensatoren 34.1, 34.2 für den Betrieb der Schaltung 30 erforderlich ist, hängt davon ab, in welcher Weise die Schaltung 30 angewendet wird, z.B. als Stromrichtersubsystem innerhalb eines Stromrichters 20, oder als Teil eines Stromrichters 50 gemäß der nachfolgend noch erläuterten Figur 5.

Zwischen die beiden Anschlusspunkte P3, P4 ist ein Bremswiderstand R geschaltet.

Im Normalbetrieb des Stromrichters 30 werden die zwei Module 31.1, 31.3 und die zwei Module 31.2, 31.4 sowie die zwei Module 31.5, 31.7 und die zwei Module 31.6, 31.8 jeweils gleichartig angesteuert.

In einem beispielhaften Schaltzustand des Normalbetriebs, der in der Figur 3a mit Hilfe von durchgezogenen Linien bei den jeweils leitend geschalteten Halbleiterschaltern dargestellt ist, sind die Halbleiterschalter 32.1, 32.3, 32.5, 32.7, 32.9, 32.11, 32.13, 32.15 leitend geschaltet und alle anderen Halbleiterschalter gesperrt. In diesem Schaltzustand beträgt die zwischen den Anschlüssen P3, P4 anliegende Spannung gleich Null.

Durch die gleichartige Ansteuerung der Halbleiterschalter im Normalbetrieb liegen an den beiden Anschlusspunkten P3, P4 dieselben Potentiale an, so dass an dem Bremswiderstand R keine Spannung abfällt.

Es wird darauf hingewiesen, dass neben dem oben beschriebenen beispielhaften Schaltzustand für einen Normalbetrieb des Stromrichters 30 auch noch andere Schaltzustände für einen Normalbetrieb existieren, bei denen keine Spannung am Bremswiderstand Rabfällt.

Zum Beispiel zur Verminderung oder Vermeidung von Überspannungen an den Kondensatoren 34.1, 34.2 oder aus sonstigen Gründen können die Halbleiterschalter auch andersartig angesteuert werden. Dies ist in der Figur 3b dargestellt.

Nach der Figur 3b sind die Halbleiterschalter 32.1, 32.3, 32.5, 32.8, 32.9, 32.11, 32.14, 32.15 leitend geschaltet und die anderen Halbleiterschalter gesperrt. Dabei wird angenommen, dass die Spannungen an den Kondensatoren 34.1, 34.2 gleich groß sind.

Damit ist der Anschlusspunkt P3 über die Halbleiterschalter 32.3, 32.9 mit den positiven Anschlüssen der beiden Kondensatoren 34.1, 34.2 verbunden. Entsprechend ist der Anschlusspunkt P4 über die Halbleiterschalter 32.8, 32.14 mit den negativen Anschlüssen der beiden Kondensatoren 34.1, 34.2 verbunden.

Weiterhin liegt, wie im Normalbetrieb, zwischen den Anschlusspunkten P3, P4 eine Ausgangsspannung in Höhe von Null an.

Wie bereits erläutert wurde, ist der Bremswiderstand R zwischen die beiden Anschlusspunkte P3, P4 geschaltet. Da die Anschlusspunkte P3, P4 mit den positiven und negativen Anschlüssen der beiden Kondensatoren 34.1, 34.2 verbunden sind, ist der Bremswiderstand R zu den beiden Kondensatoren 34.1, 34.2 jeweils parallel geschaltet.

Dies hat zur Folge, dass sich bei der vorstehend erläuterten redundanten Ansteuerung der Halbleiterschalter gemäß der Figur 3b die Kondensatoren 34.1, 34.2 über den Bremswiderstand R entladen können. Beispielsweise kann eine an den Kondensatoren 34.1, 34.2 vorhandene Überspannung somit über den Bremswiderstand R abgebaut werden. Es kann somit Leistung in dem Bremswiderstand Rumgesetzt werden. Zusätzliche schaltbare Bauelemente sind hierzu nicht erforderlich.

Es ist also der Stromrichter 30 vorhanden, der mit Hilfe von Halbleiterschaltern aufgebaut ist, und es ist zumindest ein Bremswiderstand derart in die elektrische Schaltung des Stromrichters 30 verschaltet, dass ein Stromfluss durch diesen Bremswiderstand nur von den vorhandenen Halbleiterschaltern des Stromrichters 30 beeinflusst wird, also ohne dass hierzu ein zusätzlicher Schalter erforderlich wäre.

Es wird darauf hingewiesen, dass zu allen möglichen Schaltzuständen die verfügbaren redundanten Zustände mit gleicher Ausgangsspannung zwischen den Anschlusspunkten P3, P4 verwendet werden können, um je nach Erfordernissen des Betriebszustandes des Stromrichters eine Spannung an den Bremswiderstand R zu legen oder nicht.

Es versteht sich, dass die einzelnen Halbleiterschalter auch als Schaltermodule ausgebildet sein können, bei denen jeweils mehrere Halbleiterschalter in Reihe und/oder parallel geschaltet sind. Entsprechendes gilt auch für die Dioden. Ebenfalls versteht es sich, dass die einzelnen Kondensatoren auch als Kondensatorbänke ausgebildet sein können, bei denen jeweils mehrere Kondensatoren in Reihe und/oder parallel geschaltet sind. Weiterhin können auch die Kondensatoren der einzelnen Module oder mehrerer Module zu einer Kondensatorbank zusammengefasst sein.

Es versteht sich ferner, dass der Stromrichter 30 nach den Figuren 3a, 3b, bei dem zwei H-Brücken 36 in Reihe geschaltet sind, auf eine beliebige Anzahl solcher in Reihe geschalteter H-Brücken erweitert werden kann.

So ist beispielsweise in Figur 4 ein einphasiger Stromrichterzweig 40 mit fünf in Reihe geschalteten H-Brücken 42 dargestellt. Zwischen den jeweils zwei Verbindungspunkten zweier benachbarter H-Brücken 42 ist jeweils ein Bremswiderstand R geschaltet. Die Ansteuerung der Bremschopper-Funktion mit Hilfe dieser Bremswiderstände R erfolgt sinngemäß auf die anhand der Figuren 3a, 3b beschriebene Art und Weise.

Die Figur 5 zeigt die Anwendung der Schaltung der Figuren 3a, 3b als Stromrichtersubsystems 30 in einem einphasigen Stromrichter 50.

Die Einspeisung in die beiden Kondensatoren 34.1, 34.2 erfolgt potentialgetrennt über eingangsseitige Transformatoren 51 und Gleichrichter 52. Die äußeren Ausgangsklemmen der beiden H-Brücken 36 sind in diesem Ausführungsbeispiel nicht wie in den Figuren 3a, 3b zu je einem Anschluss Pl, P2 zusammengefasst, sondern mit potentialgetrennten Wicklungen eines ausgangsseitigen Transformators 54 verbunden. Über die entsprechende Ansteuerung aller Halbleiterschalter des Stromrichters 50 kann an den Ausgangsklemmen des Transformators 54 eine Gleichspannung oder eine Wechselspannung erzeugt werden.

Die Ansteuerung der Bremschopper-Funktion erfolgt davon unanhängig in der anhand der Figuren 3a, 3b beschriebenen Weise. Es versteht sich, dass in analoger Art und Weise auch ein mehrphasiger Stromrichter aufgebaut und betrieben werden kann.

Es wird ausdrücklich darauf hingewiesen, dass die vorstehend erläuterte, andersartige bzw. redundante Ansteuerung der Halbleiterschalter der Stromrichter bzw. Stromrichtersubsysteme 10, 20, 30, 40, 50 nicht nur dazu verwendet werden kann, eine beispielsweise im generatorischen Betrieb auftretende Erhöhung der Gleichspannung an den Kondensatoren zu verhindern oder zu vermindern, sondern dass diese andersartige Ansteuerung ganz allgemein dazu herangezogen werden kann, um die Spannung an den Kondensatoren auch in sonstigen, anderen Betriebszuständen des Stromrichters bzw. Stromrichtersubsystems 10, 20, 30, 40, 50 zu beeinflussen. Insbesondere kann die andersartige Ansteuerung dazu verwendet werden, um die Spannung an den Kondensatoren zu vermindern, wenn Leistung in die wechselspannungsseitigen Anschlusspunkte des Stromrichters bzw. Stromrichtersubsystems 10, 20, 30, 40, 50 eingespeist wird.

## Patentansprüche

1. Elektrische Schaltung (10) für einen Stromrichter, mit einer Anzahl von Halbleiterschaltern (12.1, 12.2, ..., 12.8) und Kondensatoren (14.1, 14.2) oder Kondensatorbänken, die zum Betrieb des Stromrichters vorhanden sind, und mit einem Bremswiderstand (R) zum Abbau von Energie, wobei zwei oder mehrere parallele Schaltungsstrukturen vorhanden sind, der Bremswiderstand (R) zwischen einen Knoten einer der Schaltungsstrukturen und einen Knoten einer der dazu parallelen Schaltungsstrukturen geschaltet ist, der Bremswiderstand (R) mit den vorhandenen Halbleiterschaltern (12.1, 12.2, ..., 12.8) verbunden ist, ohne dass ein zusätzlicher Schalter vorhanden ist, und der Betrieb des Stromrichters und der Strom durch den Bremswiderstand (R) mittels der vorhandenen Halbleiterschalter (12.1, 12.2, ..., 12.8) steuerbar sind, wobei die Halbleiterschalter (12.1, 12.2, ..., 12.8) zu Modulen (11.1, 11.2, 11.3, 11. 4) zusammengeschaltet sind und der Stromrichter aus mindestens vier jeweils zwei in Serie geschaltete Halbleiterschalter (12.1, 12.2, ..., 12.8) umfassenden Modulen (11.1, 11.2, 11.3, 11.4) aufgebaut ist, wobei jeweils zwei der Module (11.1, 11.2 bzw. 11.3, 11.4) mit mindestens einem Kondensator (14.1, 14.2) oder einer Kondensatorbank parallelgeschaltet sind, um jede parallele Schaltungsstruktur zu definieren, und wobei die Verbindungspunkte der Halbleiterschalter der Module, die nicht parallel geschaltet sind (11.1, 11.3 bzw. 11.2, 11.4), jeweils einen Anschlusspunkt (Pl, P2) bilden, und mit dem Bremswiderstand (R), der zwischen die Verbindungspunkte (Pl, P2) der Halbleiterschalter von den Modulen, die nicht parallel geschaltet sind, geschaltet ist.

2. Elektrische Schaltung (10) nach Anspruch 1, wobei die Halbleiterschalter (12.1, 12.2, ..., 12.8) aller paralleler Schaltungsstrukturen zur Steuerung des Normalbetriebs des Stromrichters gleichartig ansteuerbar sind, und wobei die Halbleiterschalter (12.1, 12.2, ..., 12.8) zumindest einer der parallelen Schaltungsstrukturen, an welche der Bremswiderstand (R) angeschlossen ist, zur Steuerung des Stroms durch den Bremswiderstand andersartig als im Normalbetrieb ansteuerbar sind.

3. Elektrische Schaltung (10) nach Anspruch 2, wobei, wenn die Halbleiterschalter (12.1, 12.2, ..., 12.8) zweier paralleler Schaltungsstrukturen, an welche der Bremswiderstand (R) angeschlossen ist, zur Steuerung des Normalbetriebs des Stromrichters gleichartig angesteuert werden, die beiden Anschlusspunkte (P1, P2), mit denen der Bremswiderstand (R) verbunden ist, ein gleiches Potential aufweisen.

4. Elektrische Schaltung (10) nach Anspruch 2, wobei, wenn die Halbleiterschalter (12.1, 12.2, ..., 12.8) zumindest einer der parallelen Schaltungsstrukturen, an welche der Bremswiderstand (R) angeschlossen ist, zur Steuerung des Stroms durch den Bremswiderstand (R) andersartig als im Normalbetrieb angesteuert werden, die beiden Anschlusspunkte (P1, P2), mit denen der Bremswiderstand (R) verbunden ist, ein ungleiches Potential aufweisen.

5. Elektrische Schaltung (10) nach einem der Ansprüche 1 bis 4, wobei die Potentialstufen an den äußeren Wechselspannungsanschlüssen des Stromrichters davon unbeeinflusst sind, ob an die zwischen den parallelen Schaltungsstrukturen angeschlossenen Bremswiderstände (R) zum Abbau von Energie durch eine entsprechende Ansteuerung der Halbleiterschalter (12.1, 12.2, ..., 12.8) eine Spannung angelegt ist oder nicht.

6. Elektrische Schaltung (30) für einen Stromrichter, mit einer Anzahl von Halbleiterschaltern (32.1, 32.2, ..., 32.16) und Kondensatoren (34.1, 34.2) oder Kondensatorbänken, die zum Betrieb des Stromrichters vorhanden sind, und mit einem Bremswiderstand (R) zum Abbau von Energie, wobei zwei oder mehrere parallele Schaltungsstrukturen vorhanden sind, der Bremswiderstand (R) zwischen einen Knoten einer der Schaltungsstrukturen und einen Knoten einer der dazu parallelen Schaltungsstrukturen geschaltet ist, der Bremswiderstand (R) mit den vorhandenen Halbleiterschaltern (32.1, 32.2, ..., 32.16) verbunden ist, ohne dass ein zusätzlicher Schalter vorhanden ist, und der Betrieb des Stromrichters und der Strom durch den Bremswiderstand (R) mittels der vorhandenen Halbleiterschalter (32.1, 32.2, ..., 32.16) steuerbar sind, wobei die Halbleiterschalter (32.1, 32.2, ..., 32.16) zu Modulen (31.1, 31.2, ..., 31.8) zusammengeschaltet sind und der Stromrichter aus mindestens acht jeweils zwei in Serie geschaltete Halbleiterschalter (32.1, 32.2, ..., 32.16) umfassenden Modulen (31.1, 31.2, ..., 31.8) aufgebaut ist, wobei jeweils vier der Module (31.1, 31.2, 31.3, 31.4 bzw. 31.5, 31.6, 31.7, 31.8) mit mindestens einem Kondensator (34.1, 34.2) oder einer Kondensatorbank parallelgeschaltet sind, um jede parallele Schaltungstruktur zu definieren, wobei die Verbindungspunkte der Halbleiterschalter von zwei der parallelgeschalteten Module (31.1, 31.3 bzw. 31.6, 31.8) jeweils einen Anschlusspunkt (Pl, P2) bilden, und wobei die Verbindungspunkte der Halbleiterschalter von zwei der Module, die nicht parallel geschaltet sind (31.2, 31.5 bzw. 31.4, 31.7), jeweils einen Anschlusspunkt (P3, P4) bilden, und mit dem Bremswiderstand (R), der zwischen die Verbindungspunkte (P3, P4) der Halbleiterschalter oder Schaltermodule von den Modulen, die nicht parallel geschaltet sind, geschaltet ist.

7. Elektrische Schaltung (30) nach Anspruch 6, wobei die Halbleiterschalter (32.1, 32.2, ..., 32.16) aller paralleler Schaltungsstrukturen zur Steuerung des Normalbetriebs des Stromrichters gleichartig ansteuerbar sind, und wobei die Halbleiterschalter (32.1, 32.2, ..., 32.16) zumindest einer der parallelen Schaltungsstrukturen, an welche der Bremswiderstand (R) angeschlossen ist, zur Steuerung des Stroms durch den Bremswiderstand andersartig als im Normalbetrieb ansteuerbar sind.

8. Elektrische Schaltung (30) nach Anspruch 7, wobei, wenn die Halbleiterschalter (32.1, 32.2, ..., 32.16) zweier paralleler Schaltungsstrukturen, an welche der Bremswiderstand (R) angeschlossen ist, zur Steuerung des Normalbetriebs des Stromrichters gleichartig angesteuert werden, die beiden Anschlusspunkte (P3, P4), mit denen der Bremswiderstand (R) verbunden ist, ein gleiches Potential aufweisen.

9. Elektrische Schaltung (30) nach Anspruch 7, wobei, wenn die Halbleiterschalter (32.1, 32.2, ..., 32.16) zumindest einer der parallelen Schaltungsstrukturen, an welche der Bremswiderstand (R) angeschlossen ist, zur Steuerung des Stroms durch den Bremswiderstand (R) andersartig als im Normalbetrieb angesteuert werden, die beiden Anschlusspunkte (P3, P4), mit denen der Bremswiderstand (R) verbunden ist, ein ungleiches Potential aufweisen.

10. Elektrische Schaltung (30) nach einem der Ansprüche 6 bis 9, wobei die Potentialstufen an den äußeren Wechselspannungsanschlüssen des Stromrichters davon unbeeinflusst sind, ob an die zwischen den parallelen Schaltungsstrukturen angeschlossenen Bremswiderstände (R) zum Abbau von Energie durch eine entsprechende Ansteuerung der Halbleiterschalter (32.1, 32.2, ..., 32.16) eine Spannung angelegt ist oder nicht.

11. Verfahren zum Betreiben einer elektrischen Schaltung nach einem der Ansprüche 1 bis 5, bei dem innerhalb der parallelen Schaltungsstrukturen verfügbare redundante Schaltzustände genutzt werden, um Energie in dem Bremswiderstand (R) abzubauen.

12. Verfahren nach Anspruch 11, bei dem in einem Normalbetrieb die Halbleiterschalter oder Schaltermodule der parallelgeschalteten Module gleichartig angesteuert werden.

13. Verfahren zum Betreiben einer elektrischen Schaltung nach Anspruch 1, wobei zur Steuerung eines Stroms durch den Bremswiderstand (R) die Halbleiterschalter oder Schaltermodule von zwei Modulen, die nicht parallel geschaltet sind (11.1, 11.3), wie im Normalbetrieb angesteuert werden und die Halbleiterschalter oder Schaltermodule von anderen zwei Modulen, die nicht parallel geschaltet sind (11.2, 11.4), andersartig als im Normalbetrieb angesteuert werden.

14. Verfahren zum Betreiben einer elektrischen Schaltung nach einem der Ansprüche 6 bis 10, bei dem innerhalb der parallelen Schaltungsstrukturen verfügbare redundante Schaltzustände genutzt werden, um Energie in dem Bremswiderstand (R) abzubauen.

15. Verfahren nach Anspruch 14, bei dem in einem Normalbetrieb die Halbleiterschalter oder Schaltermodule der parallelgeschalteten Module gleichartig angesteuert werden.

16. Verfahren zum Betreiben einer elektrischen Schaltung nach Anspruch 6, wobei zur Steuerung eines Stroms durch den Bremswiderstand (R) die Halbleiterschalter oder Schaltermodule von maximal sechs Modulen (31.1, 31.2, 31.3, 31.5, 31.6, 31.8) wie im Normalbetrieb angesteuert werden und die Halbleiterschalter oder Schaltermodule der anderen mindestens zwei Module (31.4, 31.7) andersartig angesteuert werden.

## Claims

1. Electrical circuit (10) for a frequency converter, with a number of semiconductor switches (12.1, 12.2, ..., 12.8) and capacitors (14.1, 14.2) or capacitor banks, which are present operating the frequency converter, and with a braking resistance (R) for degrading energy, wherein two or more parallel circuit structures are present, the braking resistance (R) is positioned between a node of one of the circuit structures and a node of one of the circuit structures parallel thereto, the braking resistance (R) is connected to the present semiconductor switches (12.1, 12.2, ..., 12.8), without an additional switch being present, and the operation of the frequency converter and the current by means of the braking resistance (R) can be controlled by means of the present semiconductor switches (12.1, 12.2, ..., 12.8), wherein the semiconductor switches (12.1, 12.2, ..., 12.8) are wired together to form modules (11.1, 11.2, 11.3, 11.4) and the frequency converter is constructed of at least four modules (11.1, 11.2, 11.3, 11.4) comprising semiconductor switches (12.1, 12.2, ..., 12.8) connected in each case in series of two, wherein in each case two of the modules (11.1, 11.2 or 11.3, 11.4) are connected in parallel at least one capacitor (14.1, 14.2) or a capacitor bank, in order to define each parallel circuit structure, and wherein the connecting points of the semiconductor switches of the modules, which are not connected in parallel (11.1, 11.2 or 11.3, 11.4), form in each case a terminal point (P1, P2), and to the braking resistance (R), which is positioned between the terminal points (P1, P2) of the semiconductor switches of the modules, which are not connected in parallel.

2. Electrical circuit (10) according to claim 1, wherein the semiconductor switches (12.1, 12.2, ..., 12.8) for all parallel circuit structures are able to be controlled in the same way for controlling the normal operation of the frequency converter, and wherein the semiconductor switches (12.1, 12.2, ..., 12.8) on at least one of the parallel circuit structures to which the braking resistance (R) is connected, can be controlled in a different way than in normal operation for controlling the current by means of the braking resistance.

3. Electrical circuit (10) according to claim 2, wherein when the semiconductor switch (12.1, 12.2, ..., 12.8) of two parallel circuit structures, to which the braking resistance (R) is connected, are controlled in the same way for controlling the normal operation of the frequency converter, the two terminal points (P1, P2), to which the braking resistance (R) is connected, have an identical potential.

4. Electrical circuit (10) according to claim 2, wherein when the semiconductor switches (12.1, 12.2, ..., 12.8) of at least one of the parallel circuit structures are to which the braking resistance (R) is connected, are controlled for controlling the current by means of the braking resistance (R) in another manner than in normal operation, the two terminal points (P1, P2), to which the braking resistance (R) is connected, have a non-identical potential.

5. Electrical circuit (10) according to any of claims 1 to 4, wherein the potential steps at the outer AC voltage terminals of the frequency converter are not influenced by whether or not a voltage is applied to the braking resistances (R) connected between the parallel circuit structures for degrading energy by means of an appropriate controlling of the semiconductor switches (12.1, 12.2, ..., 12.8).

6. Electrical circuit (30) for a frequency converter, with a number of semiconductor switches (32.1, 32.2, ..., 32.16) and capacitors (34.1, 34.2) or capacitor banks, which are present for the operation of the frequency converter, and with a braking resistance (R) for the degradation of energy, wherein two or more parallel structures are present, the braking resistance (R) is positioned between a node of one of the circuit structures and a node of one of the circuit structures parallel thereto, the braking resistance (R) is connected to the present semiconductor switches (32.1, 32.2, ..., 32.16), without an additional switch being present, and the operation of the frequency converter and the current by mean of the braking resistance (R) can be controlled by means of the present semiconductor switches (32.1, 32.2, ..., 32.16), wherein the semiconductor switches (32.1, 32.2, ..., 32.16) are connected together to form modules (31.1, 31.2, ..., 31.8) and the frequency converter constructed of modules (31.1, 31.2, ..., 31.8) comprising in each case two semiconductor switches (32.1, 32.2, ..., 32.16) connected in series, wherein in each case four of the modules (31.1, 31.2, 31.3, 31.4 or 31.5, 31.6, 31.7, 31.8) are connected in parallel to at least one capacitor (34.1, 34.2) or a capacitor bank, in order to define each parallel circuit structure, wherein the connecting points of the semiconductor switches of two of the modules (31.1, 31.3 or 31.6, 31.8) connected in parallel form in each case a terminal point (P1, P2), and wherein the connecting points of the semiconductor switches of two of the modules, which are not connected in parallel (31.2, 31.5 or 31.4, 31.7), form in each case one terminal point (P3, P4), and to the braking resistance (R), which is connected between the connecting points (P3, P4) of the semiconductor switches or switch modules of the modules, which are not connected in parallel.

7. Electrical circuit (30) according to claim 6, wherein the semiconductor switches (32.1, 32.2, ..., 32.16) of all parallel circuit structures for controlling the normal operation of the frequency converter can be controlled in the same way, and wherein the semiconductor switches (32.1, 32.2, ..., 32.16) of at least one of the parallel circuit structures, to which the braking resistance (R) is connected, can be controlled in a different manner than in normal operation for controlling the current by means of the braking resistance.

8. Electrical circuit (30) according to claim 7, wherein when the semiconductor switches (32.1, 32.2, ..., 32.16) of two parallel circuit structures, to which the braking resistance (R) is connected, are controlled in the same way for controlling the normal operation of the frequency converter, the two terminal points (P3, P4), to which the braking resistance (R) is connected, have an identical potential.

9. Electrical circuit (30) according to claim 7, wherein, when the semiconductor switches (32.1, 32.2, ..., 32.16) from at least one of the parallel circuit structures, to which the braking resistance (R) is connected, are controlled in a different manner than in normal operation for controlling the current by means of the braking resistance (R), the two terminal points (P3, P4), to which the braking resistance (R) is connected, have a non-identical potential.

10. Electrical circuit (30) according to any of claims 6 to 9, wherein the potential steps at the outer AC voltage terminals of the frequency converter are not influenced by whether or not a voltage is applied to the braking resistances (R) connected between the parallel circuit structures for degrading energy by means of an appropriate controlling of the semiconductor switches (32.1, 32.2, ..., 32.16).

11. Method for operating an electrical circuit according to any of claims 1 to 5, in which available redundant switching states within the parallel circuit structures are used to degrade energy in the braking resistance (R).

12. Method according to claim 11, in a normal operation the semiconductor switches or switch modules of the modules connected in parallel are controlled in the same manner.

13. Method for operating an electrical circuit according to claim 1, wherein for controlling a current by means of the braking resistance (R), the semiconductor switches or switch modules of two modules, which are not connected in parallel (11.1, 11.3), are controlled as in normal operation and the semiconductor switches or switch modules other two modules, which are not connected in parallel (11.2, 11.4), are controlled in a manner different than in normal operation.

14. Method for operating an electrical circuit according to any of claims 6 to 10, in which available redundant switching states within the parallel circuit structures are used to degrade energy in the braking resistance (R).

15. Method according to claim 14, in which in a normal operation the semiconductor switches or switch modules of the modules connected in parallel are controlled in the same manner.

16. Method for operating an electrical circuit according to claim 6, wherein controlling a current by means of the braking resistance (R) the semiconductor switches or switch modules of maximum six modules (31.1, 31.2, 31.3, 31.5, 31.6, 31.8) are controlled as in normal operation and the semiconductor switches or switch modules of the other at least two modules (31.4, 31.7) are controlled in another manner.

## Revendications

1. Circuit électrique (10) pour un convertisseur, avec un nombre de commutateurs à semi-conducteur (12.1, 12.2, ..., 12.8) et des condensateurs (14.1, 14.2) ou des batteries de condensateurs qui sont présents pour le fonctionnement du convertisseur, et avec une résistance au freinage (R) pour la diminution d'énergie, dans lequel deux ou plusieurs structures de circuit parallèles sont présentes, la résistance au freinage (R) est montée entre un noeud d'une des structures de circuit et un noeud d'une des structures de circuit parallèles à celle-ci, la résistance au freinage (R) est reliée aux commutateurs à semi-conducteur (12.1, 12.2, ..., 12.8) présents, sans qu'un commutateur supplémentaire ne soit présent, et le fonctionnement du convertisseur et le courant traversant la résistance au freinage (R) peuvent être commandés au moyen des commutateurs à semi-conducteur (12.1, 12.2, ..., 12.8) présents, dans lequel les commutateurs à semi-conducteur (12.1, 12.2, ..., 12.8) sont interconnectés pour former des modules (11.1, 11.2, 11.3, 11.4) et le convertisseur est constitué d'au moins quatre modules (11.1, 11.2, 11.3 11.4) comprenant respectivement deux commutateurs à semi-conducteur (12.1, 12.2, ..., 12.8) montés en série, dans lequel respectivement deux des modules (11.1, 11.2 ou 11.3, 11.4) sont montés en parallèle avec au moins un condensateur (14.1, 14.2) ou une batterie de condensateurs afin de définir chaque structure de circuit parallèle, et dans lequel les points de connexion des commutateurs à semi-conducteur des modules qui ne sont pas montés en parallèle (11.1, 11.3 ou 11.2, 11.4), forment respectivement un point terminal (P1, P2), et avec la résistance au freinage (R), qui est montée entre les points de connexion (P1, P2) des commutateurs à semi-conducteur des modules qui sont pas montés en parallèle.

2. Circuit électrique (10) selon la revendication 1, dans lequel les commutateurs à semi-conducteur (12.1, 12.2, ..., 12.8) de toutes les structures de circuit parallèles sont commandables de manière similaire pour la commande du fonctionnement normal du convertisseur, et dans lequel les commutateurs à semi-conducteur (12.1, 12.2, ..., 12.8) au moins d'une des structures de circuit parallèles, auxquelles la résistance au freinage (R) est raccordée, peuvent être commandés pour la commande du courant traversant la résistance au freinage autrement que pendant le fonctionnement normal.

3. Circuit électrique (10) selon la revendication 2, dans lequel lorsque les commutateurs à semi-conducteur (12.1, 12.2, ..., 12.8) de deux structures de circuit parallèles, auxquelles est raccordée la résistance au freinage (R), sont commandés de manière similaire pour la commande du fonctionnement normal du convertisseur, les deux points terminaux (P1, P2), auxquels la résistance au freinage (R) est reliée, présentent un potentiel identique.

4. Circuit électrique (10) selon la revendication 2, dans lequel, lorsque les commutateurs à semi-conducteur (12.1, 12.2, ..., 12.8) au moins d'une des structures de circuit parallèles, auxquelles est raccordée la résistance au freinage (R), sont commandés pour la commande du courant traversant la résistance au freinage (R) autrement qu'en fonctionnement normal, les deux points terminaux (P1, P2), auxquels la résistance au freinage (R) est reliée, présentent un potentiel qui n'est pas identique.

5. Circuit électrique (10) selon l'une des revendications 1 à 4, dans lequel les échelons de potentiel ne sont pas influencés sur les raccords de tension alternative extérieurs du convertisseur si une tension est appliquée ou non au niveau des résistances au freinage (R) raccordées entre les structures de circuit parallèles pour la diminution d'énergie par une commande correspondante des commutateurs à semi-conducteur (12.1, 12.2, ..., 12.8).

6. Circuit électrique (30) pour un convertisseur, avec un nombre de commutateurs à semi-conducteur (32.1, 32.2, ..., 32.16) et des condensateurs (34.1, 34.2) ou des batteries de condensateurs qui sont présents pour le fonctionnement du convertisseur, et avec une résistance au freinage (R) pour la diminution d'énergie, dans lequel deux ou plusieurs structures de circuit parallèles sont présentes, la résistance au freinage (R) est montée entre un noeud d'une des structures de circuit et un noeud d'une des structures de circuit parallèles à celle-ci, la résistance au freinage (R) est reliée aux commutateurs à semi-conducteur (32.1, 32.2, ..., 32.16) présents sans qu'un commutateur supplémentaire ne soit présent, et le fonctionnement du convertisseur et le courant traversant la résistance au freinage (R) peuvent être commandés au moyen des commutateurs à semi-conducteur (32.1, 32.2, ..., 32.16) présents, dans lequel les commutateurs à semi-conducteur (32.1, 32.2, ..., 32.16) sont interconnectés pour former des modules (31.1, 31.2, ..., 31.8) et le convertisseur est constitué d'au moins huit modules (31.1, 32.2, ..., 31.8) comprenant respectivement deux commutateurs à semi-conducteur (32.1, 32.2, ..., 32.16) montés en série, dans lequel respectivement quatre des modules (31.1, 31.2, 31.3, 31.4 ou 31.5, 31.6, 31.7, 31.8) sont montés en parallèle avec au moins un condensateur (34.1, 34.2) ou une batterie de condensateurs afin de définir chaque structure de circuit parallèle, dans lequel les points de connexion des commutateurs à semi-conducteur de deux des modules (31.1, 31.3 ou 31.6, 31.8) montés en parallèle, forment respectivement un point terminal (P1, P2), et dans lequel les points de connexion des commutateurs à semi-conducteur de deux des modules qui sont pas montés en parallèle (31.2, 31.5 ou 31.4, 31.7), forment respectivement un point terminal (P3, P4), et avec la résistance au freinage (R) qui est montée entre les points de connexion (P3, P4) des commutateurs à semi-conducteur ou modules de commutateur des modules qui ne sont pas montés en parallèle.

7. Circuit électrique (30) selon la revendication 6, dans lequel les commutateurs à semi-conducteur (32.1, 32.2, ..., 32.16) de toutes les structures de circuit parallèles sont commandables de manière similaire pour la commande du fonctionnement normal du convertisseur, et dans lequel les commutateurs à semi-conducteur (32.1, 32.2, ..., 32.16) au moins d'une des structures de circuit parallèles, auxquelles est raccordée la résistance au freinage (R), peuvent être commandées pour la commande du courant traversant la résistance au freinage autrement que pendant le fonctionnement normal.

8. Circuit électrique (30) selon la revendication 7, dans lequel lorsque les commutateurs à semi-conducteur (32.1, 32.2, ..., 32.16) de deux structures de circuit parallèles, auxquelles est raccordée la résistance au freinage (R), sont commandés de manière similaire pour la commande du fonctionnement normal du convertisseur, les deux points terminaux (P3, P4), auxquels la résistance au freinage (R) est reliée, présentent un potentiel identique.

9. Circuit électrique (30) selon la revendication 7, dans lequel lorsque les commutateurs à semi-conducteur (32.1, 32.2, ..., 32.16) au moins d'une des structures de circuit parallèles, auxquelles la résistance au freinage (R) est raccordée, sont commandés pour la commande du courant traversant la résistance au freinage (R) autrement que pendant le fonctionnement normal, les deux points terminaux (P3, P4) auxquels la résistance au freinage (R) est reliée, présentent un potentiel qui n'est pas identique.

10. Circuit électrique (30) selon l'une des revendications 6 à 9, dans lequel les échelons de potentiel ne sont pas influencés sur les raccords de tension alternative extérieurs du convertisseur si une tension est appliquée ou non au niveau des résistances au freinage (R) raccordées entre les structures de circuit parallèles pour la diminution d'énergie par une commande correspondante des commutateurs à semi-conducteur (12.1, 12.2, ..., 12.8).

11. Procédé de fonctionnement d'un circuit électrique selon l'une des revendications 1 à 5, pour lequel des états de commutation redondants disponibles dans les structures de circuit parallèles sont utilisés afin de diminuer l'énergie dans la résistance au freinage (R).

12. Procédé selon la revendication 11, pour lequel dans un fonctionnement normal, les commutateurs à semi-conducteur ou modules de commutateur des modules montés en parallèle sont commandés de manière similaire.

13. Procédé de fonctionnement d'un circuit électrique selon la revendication 1, dans lequel pour la commande d'un courant traversant la résistance au freinage (R), les commutateurs à semi-conducteur ou modules de commutateur de deux modules qui ne sont pas montés en parallèle (11.1, 11.3), sont commandés comme en fonctionnement normal et les commutateurs à semi-conducteur ou modules de commutateurs des deux autres modules qui sont pas montés en parallèle (11.2, 11.4), sont commandés autrement que pendant le fonctionnement normal.

14. Procédé de fonctionnement d'un circuit électrique selon l'une des revendications 6 à 10, pour lequel des états de commutation redondants disponibles dans les structures de circuit parallèles sont utilisés afin de diminuer l'énergie dans la résistance au freinage (R).

15. Procédé selon la revendication 14, pour lequel dans un fonctionnement normal, les commutateurs à semi-conducteur ou modules de commutateur des modules montés en parallèle sont commandés de manière similaire.

16. Procédé de fonctionnement d'un circuit électrique selon la revendication 6, dans lequel pour la commande d'un courant traversant la résistance au freinage (R) les commutateurs à semi-conducteur ou modules de commutateur de maximum six modules (31.1, 31.2, 31.3, 31.5, 31.6, 31.8) sont commandés comme en fonctionnement normal et les commutateurs à semi-conducteur ou modules de commutateur des autres au moins deux modules (31.4, 31.7) sont commandés autrement.
